# EUROPÄISCHE PATENTANMELDUNG

(11) **EP 0 596 378 A1**
(43) Veröffentlichungstag der Anmeldung: **11.05.1994**
(21) Anmeldenummer: 93117296.9
(22) Anmeldetag: 26.10.1993
(51) Int. Cl.: C08K 7/06, C08L 25/04, C08L 59/00, C08L 67/02

(54) **Kunststoff-Formmasse zur Herstellung von Formteilen mit farblich abstimmbarem Dekoreffekt**

(30) Priorität: 31.10.1992 DE 4236870
(71) Anmelder: HOECHST AKTIENGESELLSCHAFT, D-65929 Frankfurt am Main (DE)
(72) Erfinder: Gübitz, Franz, D-65779 Kelkheim/Ts (DE); Tönnes, Kai-Uwe, Dr., D-65428 Rüsselsheim (DE)

(57) **Zusammenfassung**

Eine Kunststoff-Formmasse, welche 0,3 bis 3 Gew.-% Kohlenstoff-Fasern mit einer Faserlänge von 0,5 bis 18 mm enthält, läßt sich zu Formteilen mit einem farblich abstimmbaren Dekoreffekt verarbeiten. Diese Formteile finden insbesondere Anwendung im Kraftfahrzeug-Innenraum, eignen sich jedoch auch für andere Anwendungszwecke, wie beispielsweise für Haushaltskleingeräte, Gartenmöbel oder für Bürogeräte.

## Beschreibung

Die Erfindung bezieht sich auf eine thermoplastische Kunststoff-Formmasse zur Herstellung von Formteilen mit einem speziellen dekorativen Oberflächeneffekt. Die Formmasse kann mittels der üblichen Verarbeitungsverfahren wie Spritzgießen, Extrudieren und Extrusionsblasformen verarbeitet werden.

Sowohl Kfz-Innenverkleidungsteile wie Abdekkungen von A-, B-, C-Säulen und dergleichen als auch Gehäuse von Haushaltskleingeräten werden derzeit in der Regel im Spritzgießverfahren aus thermoplastischen Kunststoffen hergestellt.

Die thermoplastischen Werkstoffe sind in der Masse eingefärbt und die Fertigteile wegen des Aussehens (Design) und des Griffgefühls (Haptik) in sehr vielen Fällen mit einer Oberflächenstruktur (Narbung) versehen. Diese Narbung wird während des Spritzgießprozesses durch das Abformen entsprechender Gravuren erzeugt, welche in die Oberflächen der Kavität des Spritzgießwerkzeugs eingearbeitet sind. Das Resultat sind Formteile mit strukturierter, farblich aber homogener Oberflächenbeschaffenheit.

In der Masse eingefärbte Formteile mit Oberflächennarbungen stellen für viele Anwendungen eine ausreichende Lösung hinsichtlich Design- und Qualitätsanforderungen dar. Es besteht jedoch beispielsweise für die Innenräume von Kraftfahrzeugen der Mittel- und der Oberklasse ein Bedarf an Formteilen, die hinsichtlich Optik und Komfort höheren Ansprüchen genügen können.

Zur Erzeugung anspruchsvollerer Oberflächen bei Formteilen für den Kfz-Innenraum kann man die Verkleidungsteile entweder lackieren (beispielsweise Softlackierung) oder mit Folien oder Textilmaterialien kaschieren. Die Kaschierung erfolgt jeweils mit Hilfe von Klebstoffen. Je nach Art des Trägerwerkstoffes ist zur Erzielung einer guten Haftfestigkeit noch eine Vorbehandlung der Formteile durch Abflammen, CoronaEntladung oder ähnliches erforderlich. Diese einzelnen Verfahrensschritte bedeuten einen relativ hohen Fertigungsaufwand. Ein weiterer, damit verbundener Nachteil liegt in dem ungünstigen Fogging-Verhaften.

Unter Fogging versteht man die Kondensation von flüchtigen Bestandteilen aus der Kfz-Innenausstattung an den Glasscheiben, insbesondere an der Windschutzscheibe. Die Fogging-Intensität ist naturgemäß abhängig von mehreren Faktoren und von den herrschenden Temperaturbedingungen. Da Klebstoffe häufig relativ hohe Anteile an flüchtigen Substanzen enthalten, stellen klebkaschierte Teile praktisch immer ein deutlich foggingförderndes Potential dar.

Ein weiterer Nachteil kann bei klebkaschierten Teilen hinsichtlich der Gestaltungsfreiheit auftreten. Aufgrund der teilweise nur begrenzten Verformbarkeit der Textilien bzw. Folien während des Kaschiervorganges sind gegebenenfalls Einschränkungen hinsichtlich der geometrischen Ausführung der Trägerteile zu berücksichtigen.

Es bestand daher die Aufgabe, thermoplastische Werkstoffe zu entwickeln, die mit den üblichen Kunststoff-Formgebungsverfahren verarbeitet werden können. Insbesondere sollen die Oberflächen der Fertigteile einen speziellen dekorativen Oberflächeneffekt aufweisen (gesprenkelte Oberflächen, Melange-Effekt, Textil-Effekt).

Es ist grundsätzlich möglich, eingefärbte thermoplastische Kunststoffe, gegebenenfalls zusätzlich mit Verstärkungsstoffen wie Glasfasern oder Talkum und/oder Elastomeren modifiziert, mit andersfarbigen Fasern zu versehen. Es ist bekannt, daß thermisch und mechanisch gut beständige Fasern aus z.B. thermoplastischem Polyester, Polyamid oder Polyacrylnitril in einer Menge von ca. 0,5 bis 3 % zum Polypropylen zugemischt und mit dem Polymeren auf Extrudern homogen vermischt werden können. Daraus hergestellte und mit einer genarbten Oberfläche versehene Testplatten zeigten den gewünschten, an Textilien erinnernden Oberflächeneffekt. Versuche zur Herstellung von großflächigen Formteilen, bei denen geometrisch bedingt lange Fließwege vorhanden sind, waren jedoch unbefriedigend verlaufen. Der Grund waren nicht ausreichende thermische und mechanische Widerstandskraft der Polyester-, Polyamid- oder Polyacrylnitril-Fasern. Die beim Spritzgießen von beispielsweise Polypropylen oder Polyester erforderliche Verarbeitungstemperatur von ca. 230 bis 280 °C und die bei Schneckenspritzgießmaschinen während des Homogenisierens und beim Durchströmen von Heißkanälen und dünnen Anschnitten auftretende Materialscherung führten zu einer starken thermischen Schädigung der Fasern. Weiterhin kam es wegen dieser Scherkräfte, in Verbindung mit der hohen Temperatur, teilweise sogar zu einer Auflösung der Faser-Geometrie, wodurch der Eindruck einer textilähnlichen Oberfläche völlig verloren ging.

Wegen der Probleme bei der Verwendung der Polyester-, Polyamid- und Polyacrylnitril-Fasern wurde vorgeschlagen, Kohlenstoff-Fasern zu verwenden (vgl. DE 42 21 208). Dabei wurde gefunden, daß bei Verwendung von Kohlenstoff-Fasern keine mechanischen oder thermischen Probleme auftreten und der gewünschte dekorative Effekt der Formteiloberfläche erreicht werden kann.

Die Verwendung von Kohlenstoff-Fasern zur Verstärkung von Polymeren ist an sich bekannt. Üblicherweise werden Mengen von 10 bis 20 % als geschnittene Kohlenstoff-Fasern zu Polymeren zugegeben, um eine markante Erhöhung der mechanischen Eigenschaften (Biegefestigkeit usw.) zu erreichen.

Die Erfindung betrifft somit eine Kunststoff-Formmasse zur Herstellung von Formteilen mit einem dekorativen Oberflächeneffekt enthaltend
a) 100 bis 50 Gew.-% eines thermoplastischen Polymers,
b) 0 bis 50 Gew.-% Verstärkungs- und/oder Füllstoffe und 0,1 bis 5,0, vorzugsweise 0,2 - 3,0 Gew.-% bezogen auf die Formmasse, Kohlenstoff-Fasern mit einer Faserlänge von 0,05 bis 18 mm.

Die erfindungsgemäße Kunststoff-Formmasse enthält ein thermoplastisches organisches Polymer, beispielsweise eines der nachstehend aufgeführten:
1. Polyacetale wie Polyoxymethylen. Die Bezeichnung Polyoxymethylen schließt alle über 50 % der wiederkehrenden Einheiten (CH₂0) enthaltende Polymere, wie Polyorymethylen-Homopolymere, -Copolymere, -Terpolymere usw. ein.
2. Polyester, die sich von Dicarbonsäuren und Diolen und/oder von Hydroxycarbonsäuren oder den entsprechenden Lactonen ableiten, wie Polyethylenterephthalat, Polybutylenterephthalat, Poly-1,4-dimethylolycyclohexan-terephthalat, Poly-(2,2-bis(4-hydroxyphenyl)-propan- )terephthalat, Polyhydroxybenzoate, sowie Block-Polyetherester, die sich von Polyethylen mit Hydroxyendgruppen, Dialkoholen und Dicarbonsäuren ableiten.
3. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6.6, Polyamid-6.10, Polyamid-11, Polyamid-12, Poly-2,4,4-trimethylhexamethylenter- ephthalamid, Poly-m-phenylen-isophthalamid, sowie deren Copolymere mit Polyethern, wie beispielsweise mit Polyethylenglykol, Polypropylenglykol oder Polytetramethylenglykol.
4.Polycarbonate und Polyestercarbonate.
5. Polyphenylenoxyde und -sulfide und deren Mischungen mit Styrolpolymeren.
6. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-PolyolePrepolymere).
7. Polyvinylchlorid.
8. Polystyrol.
9. Copolymere von Styrol oder a-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie BlockCopolymere des Styrols, wie beispielsweise Styrol-Butadien-Styrol, Styrol-Isopren-Styrol, Styrol-Ethylen/Butylen-Styrol oder Styrol-Ethylen/Propylen-Styrol.
10. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 9) genannten Copolymeren, die beispielsweise als sogenannte ABS-, MBS-, ASA- oder AES-Polymere bekannt sind.
11. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, POM/thermoplastisches PUR, POM/Acrylat, POM/MBS, PPE/HIPS, PPE/Polyamid-6.6 und Copolymere, PA/HDPE, PA/PP, PA/PPE.

Bevorzugt sind die Kunststoffe POM, PBT, PET, PA, PC, PPE, ABS.

Als Basismaterial für die erfindungsgemäße Formmasse sind Polyoxymethylene besonders geeignet. Es handelt sich hierbei im allgemeinen um lineare oder verzweigte Polymere, die in der Regel mindestens 50 %, vorzugsweise mindestens 90 % Oxymethyleneinheiten (-CH₂0-) enthalten. Der Begriff Polyorymethylene umfaßt dabei sowohl Homopolymere des Formaldehyds oder seiner cyclischen Oligomere wie Trioxan oder Tetroxan als auch entsprechende Copolymere oder Terpolymere.

Homopolymere des Formaldehyds oder Trioxans sind dabei solche Polymere, deren Hydroxylendgruppen in bekannter Weise chemisch gegen Abbau stabilisiert sind, beispielsweise durch Veresterung oder Veretherung.

Copolymere sind Polymere aus Formaldehyd oder seinen cyclischen Oligomeren, insbesondere Trioxan, und cyclischen Ethern, cyclischen Acetalen und/oder linearen Polyacetalen. Als Comonomere kommen a) cyclische Ether mit 3,4,5, vorzugsweise 3 Ringgliedern, b) von Trioxan verschiedene cyclische Acetale mit 5 bis 11, vorzugsweise 5 bis 8 Ringgliedern und c) lineare Polyacetale, jeweils in Mengen von 0,1 bis 20, vorzugsweise 0,5 bis 10 Gew.-% in Frage. Am besten eignen sich Copolymere aus 99,5 bis 95 Gew.-% Trioxan und 0,5 bis 5 Gew.-% einer der vorgenannten Cokomponenten.

Verzweigte Polyoxymethylene enthalten neben den vorgenannten Cokomponenten zusätzlich ein bifunktionelles Monomer, vorzugsweise einen Diglycidylether.

In der Regel haben die Polyoxymethylene einen MFI 190/2,16 nach DIN 53 725 von 0,5 bis 75 g/10 min, insbesondere von 1 bis 50 g/10 min.

Die Formmasse kann gegebenenfalls noch bekannte, handelsübliche Zusatzstoffe wie Stabilisatoren, Nukleierungsmittel, Antistatika, Licht- und Flammschutzmittel, Gleit- und Schmiermittel, Weichmacher, Schlagzähmodifikatoren, Verstärkungsstoffe, Pigmente, Farbstoffe, optische Aufheller, Verarbeitungshilfsmittel und dergleichen enthalten, deren Menge bis zu 50 Gew.-%, bezogen auf die Gesamtmischung, betragen kann.

Als Füll- und/oder Verstärkungsstoffe werden vorzugsweise Talkum, Kreide, Glasfasern oder Glaskugeln eingesetzt.

Als Schlagzähmodifikatoren sind besonders geeignet: Thermoplastische Polyurethane, Methylmethacrylat/Butadien/Styrol-Pfropfcopolymersate (MBS) oder Acrylnitril/Butadien/Styrol-Pfropfcopolymerisate (ABS).

In das Basismaterial werden erfindungsgemäß Kohlenstoffasern mit einer Länge von 0,5 bis 18 mm, vorzugsweise 1 bis 6 mm, und einem Durchmesser von 10 bis 20 um zum Erreichen eines dekorativen Effekts eingearbeitet. Die Zugabemenge beträgt 0,1 bis 5,0 Gew.-%, vorzugsweise 0,2 bis 3 Gew.-%, bezogen auf die gesamte Formmasse.

Als Verarbeitungsverfahren sind beispielsweise das Spritzgießen, die Extrusion und das Extrusionsblasverfahren geeignet.

Die Verarbeitungsbedingungen für die erfindungsgemäße Formmasse entsprechen den Bedingungen, die normalerweise bei der Verarbeitung von thermoplastischen Kunststoffen angewendet werden. Die Verarbeitungstemperaturen - gemessen unmittelbar nach dem Verlassen der Düse - liegen beispielsweise im Falle des Polyoxymethylen, je nach Größe und Kompliziertheit des Formteils, im Bereich von 170 und 230 _{°} C. Die Werkzeugtemperatur beträgt im allgemeinen 40 bis 120_{°}C.

Für die Herstellung besonders großflächiger und verarbeitungstechnisch schwieriger Formteile können auch die für solche Artikel relativ hohen Verarbeitungstemperaturen gewählt werden, ohne daß eine Beeinträchtigung von Farbe oder Eigenschaften eintritt.

Man erhält einen optimalen Effekt bei der Verwendung von Polymeren in weißen und sehr hellen Grautönen. Gute Ergebnisse lassen sich auch mit hell eingefärbten Basispolymeren (beispielsweise hellblau, hellbraun) erreichen. Der Effekt kann durch eine Oberflächenbehandlung der Werkzeugkavitäten noch beeinflußt werden.

Mit der erfindungsgemäßen Formmasse erschließen sich unter Einsatz der üblichen, wirtschaftlich vorteilhaften Verarbeitungsverfahren für Kunststoffe (wie beispielsweise das Spritzgießen) Anwendungen, die bisher aufwendiger (wie beispielsweise durch Klebkaschierung) hergestellten Formteilen vorbehalten waren. Formteile aus der erfindungsgemäßen Formmasse können insbesondere in Kraftfahrzeug-Innenräumen Verwendung finden. Sie eignet sich jedoch ebenso für andere Anwendungszwecke, wie beispielsweise für Haushaltskleingeräte oder Büro- und Kommunikationsgeräte. Aus der Vielzahl der Anwendungsmöglichkeiten werden im folgenden einige Beispiele aufgezählt:
o Kraftfahrzeug:
   - Befestigungselemente, z.B. Clipse
   - Türinnenverkleidungen,
   - Säulenverkleidungen, Einstiegsleisten,
   - Motorradkoffer.
o Büro:
   - Büromöbelformteile-(Rückenlehnen,Armgriffie,Stuhlbeine, Computergehäuse, Ventilatorgehäuse etc.),
   - Büromöbelbeschläge,
   - Aktenkofferschalen.
o Haushalt:
   - Toastergehäuse,
   - Lampengehäuse,
   - Bügeleisen,
   - Gefrier- und Frischhaltegefäße, Schüsseln etc.,
   - Gartenmöbel.
o Bau:
   - Elektroinstallationsprogramme (wie Schalter, Schalterblenden etc.)

Die besonderen Vorteile der erfindungsgemäßen Formmassen sind:
- der hervorragende Dekoreffekt (Melange-Effekt),
- die problemlose Verarbeitbarkeit ohne thermische oder mechanische Zersetzung.

Die nachfolgenden Beispiele sollen die Erfindung erläutern:

### Beispiel 1

### Befestigungselemente für Kfz-Dachhimmel aus POM

Es wurden Befestigungskappen zur Fixierung des Dachhimmels eines Mittelklasse-PKW im Spritzgießverfahren hergestellt. Unter Gesichtspunkten des Designs bestand eine wesentliche Anforderung an die Fertigteile darin, daß deren Oberflächen an das spezielle optische Erscheinungsbild des Dachhimmels so weit wie möglich angepaßt werden sollten. Daneben waren verschiedene mechanische Anforderungen an den in die Kappe integrierten Befestigungsclips, wie hohe Zähigkeit, federelastisches Verhalten und geringe Kriechneigung zu erfüllen. Daher wurde eine thermoplastische Formmasse auf der Basis eines Acetalcopolymerisats (POM) mit einem MFI 190/2,16 (DIN 53 735) von 9 g/10 min in einer hellen Grundeinfärbung verarbeitet. In diese Formmasse waren 0,75 % geschnittene Kohlenstoff-Fasern mit einem Durchmesser von ca. 10 um eingearbeitet, mit deren Hilfe "gesprenkelte" Oberflächen erreicht wurden, welche sich ihrerseits optisch hervorragend in den umgebenden Dachhimmel einfügten. Die Formteile wurden auf einem Vierfachwerkzeug mit Kaltkanalverteiler und Punktanschnitten gefertigt. Die Verarbeitungsparameter entsprachen den für POM typischen Bedingungen (Massetemperatur 205 _{°} C, Werkzeugtemperatur 90 _{°} C). Bedingt durch die im Hinblick auf den verlangten speziellen Dekorationszweck nur geringe Zugabe von Kohlenstoff-Fasern blieben die günstigen, materialtypischen Eigenschaften des Acetalcopolymerisats in vollem Umfang erhalten.

### Beispiel 2

### Füllfederhaltergehäuse aus POM

Füllfederhaltergehäuse sind Artikel, die unter anderem sowohl modischen als auch ästhetischen Anforderungen genügen müssen und für die bereits viele Designausführungen angeboten werden. Dennoch wurde eine neuartige optische Gestaltung für Füllfederhalter gefunden. Dazu wurden die Gehäuseteile im Zweikomponenten-Spritzgießverfahren aus einer leichtfließenden Polyorymethylen-Formmasse (POM, Copolymertype) hergestellt. Die Werkstoffwahl fiel wegen der hervorragenden Federeigenschaften, Oberflächenhärte, Kratzfestigkeit und Abbildungsgenauigkeit auf einen leichtfließenden Typ dieser Materialklasse mit einem MFI 190/2,16 von 27 g/10 min. Die Gehäuseoberflächen konnten mittels der Zweikomponententechnik optisch in mehrere, farblich unterschiedliche Zonen aufgeteilt werden. Dabei wurde beispielsweise ein heller Grauton mit jeweils einer anderen Farbe, wie Rot oder Blau kombiniert. Ein besonderer optischer Effekt wurde dadurch erzielt, daß in die grau engefärbte Formmasse (1. Komponente) zusätzlich Kohlenstoff-Fasern mit einem Gewichtsanteil von 1,5 % eingearbeitet waren. Diese führten in Verbindung mit einer feinen Narbung bei den in grau gehaltenen Oberflächensegmenten zu einem dezenten "Struktur-Effekt", der den typischen "plastic look" verhinderte und ein anspruchsvolles Design sicherstellte. Bei der Verarbeitung der Formmassen wurden drei Vierfachwerkzeuge verwendet und die für POM üblichen Verfahrensparamter eingestellt (Massetemperatur 210°C, Werkzeugtemperatur 95 _{°} C).

### Beispiel 3

### Gehäuse eines Rotlichtwärmestrahlers aus PBT

Gehäuse für Rotlichtwämestrahler wurden bisher aufgrund der hohen Temperaturbeanspruchung von ca. 180°C häufig aus duroplastischen Formmassen gefertigt. Technische Probleme wie beispielsweise die Sprödigkeit von Duroplasten auf Melaminharzbasis, deren sehr große Nachschwindung sowie die dadurch hervorgerufenen Verzugs-und Spannungsrißprobleme, wirtschaftliche Nachteile wie relativ lange Zykluszeiten, die erforderliche Entgratung nach der Herstellung und ökologische Gesichtspunkte wie mangelnde Recyclierbarkeit führen zur Zeit jedoch mehr und mehr zu einer Substitution dieser Werkstoffe durch thermoplastische Formmassen auf Polyesterbasis. Daher wurde auch das Gehäuse eines Rotlichtwärmestrahlers in einem thermoplastischen Polyester realisiert. Für die Gehäuseoberflächen wurde ein modernes "Techno-Design" gefordert. Um die technisch/wirtschaftlichen Anforderungen einerseits und die Designvorgaben andererseits zu erfüllen, wurden die Gehäuseteile aus einer Polybutylenterephthalat-Formmasse (PBT) in hellgrauer Grundeinfärbung gefertigt, in die zusätzlich 1 % Kohlenstoff-Fasern eingearbeitet waren. Dabei kam ein Zweifachwerkzeug mit Kaltkanal und Punktanschnitt (wegen der guten Fließfähigkeit von PBT) zum Einsatz, dessen Kavitäten mit einer Oberflächennarbung versehen waren. Bei der Spritzgießverarbeitung wurden die für PBT-Formmassen üblichen Werte für Masse- (260 °C) und Werkzeugtemperatur (80 °C) eingestellt. Neben dem Vorteil einer deutlich wirtschaftlicheren Fertigung bei Verwendung der thermoplastischen Formmasse wurde insbesondere auch die Designvorgabe dadurch voll erreicht, daß die in die Formmasse eingearbeiteten Kohlenstoff-Fasern in Verbindung mit der Oberflächennarbung zu einem speziellen, für technische Gehäuse hervorragend geeigneten "Struktur-Effekt" führten.

### Beispiel 4

### Spardose aus POM

Eine Kunststoff-Spardose wurde auf einem Einfachwerkzeug aus einem Acetalcopolymerisat (POM) mit einem MFI 190/2,16 von 9 g/10 min spritzgegossen. Das anspruchsvolle "technische" Design mit einem zylindrischen Grundkörper und kalottenförmigen Einbuchtungen erforderte aufgrund der Hinterschnitte in Entformungsrichtung ein Spritzgießwerkzeug mit spezieller Kerntechnik (faltbarer Kern). Im Einklang mit der modernen Formgebung wurde auch eine neuartige dekorative Oberflächenoptik angestrebt. Darüber hinaus sollte aus werbetechnischen Gründen die Formteiloberfläche laserbeschriftbar sein. Alle diese Anforderungen wurden durch Verwendung eines für Laserbeschriftung geeigneten und mit 0,75 % Kohlenstoff-Fasern modifizierten Acetalcopolymerisates in hellgrauer Grundeinfärbung erreicht. Die Verarbeitungsparameter entsprachen den für POM typischen Bedingungen (Massetemperatur 205 °C, Werkzeugtemperatur 900 C). Bei den Fertigteilen wurde das technische Design durch die dezente Farbgebung und den - mittels Kohlenstoff-Fasern erzielten - "Melange-Effekt" ideal ergänzt.

### Beispiel 5

### Camping-Tafelgeschirr aus PS

Ein vollständiges Camping-Tafelgeschirr, bestehend aus Teller, Tasse und Untertasse wurde im Spritzgießverfahren hergestellt. Da diese Artikel für das höhere Preissegment geplant waren, bestand neben dem Anspruch einer attraktiven Formgebung insbesondere auch die Forderung nach einer ansprechenden, innovativen Oberflächendekoration. Aufgrund mechanischer, thermischer und wirtschaftlicher Aspekte wurde als Basismaterial ein schlagzähmodifiziertes Polystyrol mit einem MFI 200/5 von 13,5 g/10 min verarbeitet. Zur Erzielung des gewünschten dekorativen Struktureffekts auf den Oberflächen wurden in diese Basisformmasse zusätzlich Kohlenstoff-Fasern mit einem Durchmesser von 8 bis 10 um in einer Menge von 1 Gew.-% eingearbeitet. Die Formmasse wurde auf einer üblichen Schneckenspritzgießmaschine verarbeitet und im Fall des Tellers ein Einfach-Normalwerkzeug, im Fall der Untertasse ein Zweifach-Normalwerkzeug sowie für die Tasse ein Einfach-Schieberwerkzeug eingesetzt. Um eine problemlose Reinigung der Fertigteile zu gewährleisten, waren die Oberflächen der Werkzeugkavitäten ungenarbt. Es wurde jedoch durch eine entsprechende Oberflächenbehandlung der Kavitäten bei den Fertigteilen eine matte Oberfläche erzielt. Die Verarbeitungsparameter entsprachen den für Polystyrol üblichen bedingungen (Massetemperatur: 220 _{°} C, Werkzeugtemperatur 60°C). Die Artikel erreichten in der Fertigteilprüfung sowohl die geforderte Schlagzähigkeit als auch die Wärmeformbeständigkeit von 80 _{°} C. Über die Kombination von mattierten Oberflächen mit dem durch die Kohlenstoff-Fasern hervorgerufenen "Melange-Effekt" wurde das gewünschte ansprechende Design in vollem Umfang erreicht.

## Patentansprüche

1. Kunststoff-Formmasse zur Herstellung von Formteilen mit einem dekorativen Effekt, enthaltend ein Polymer aus der Gruppe der Polyacetale, Polyester, Polyamide und Copolyamide, Polycarbonate und Polyestercarbonate, Polyphenylenoxide und -sulfide, Polyurethane, Polyvinylchloride, Polysryrole und Copolymere von Styrol sowie Mischungen aus diesen Polymeren und 0,1 bis 5 Gew.-%, bezogen auf die Formmasse, Kohlenstoff-Fasern mit einer Faserlänge von 0,05 bis 18 mm und einem Durchmesser von 5 bis 20 um.

2. Formmasse nach Anspruch 1, dadurch gekennzeichnet, daß sie aus
a) 100 bis 50 Gew.-% eines thermoplastischen Kunststoffes aus der Gruppe der im Anspruch 1 genannten Polymeren,
b) 0 bis 50 Gew.-% kautschukartiger, für das jeweilige Polymer geeigneter Misch-Polymerisate
c) 0 bis 50 Gew.-% Verstärkungs- und/oder Füllstoffe und
d) 0,1 bis 5 Gew.-%, bezogen auf a) + b) + c), Kohlenstoff-Fasern mit einer Faserlänge von 0,05 bis 18 mm und einem Durchmesser von 5 bis 20 um besteht.

3. Formmasse nach Anspruch 1, dadurch gekennzeichnet, daß die Füll- und/oder Verstärkungsstoffe Talkum, Kreide, Glasfasern oder Glaskugeln sind.

4. Formmasse nach Anspruch 1, dadurch gekennzeichnet, daß das Basispolymer in einer hellen Grundeinfärbung eingefärbt ist.
